(19) Europäisches Patentamt
European Patent Office
Office européen des brevets

(11) **EP 2 913 135 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(51) Int Cl.:
**B23K 3/08** *(2006.01)* **B23K 31/12** *(2006.01)*
**B23K 1/20** *(2006.01)* **B23K 3/047** *(2006.01)*
**B23K 3/03** *(2006.01)* **B23K 1/005** *(2006.01)*

(21) Anmeldenummer: **14193214.5**

(22) Anmeldetag: **14.11.2014**

(54) **Fertigungseinrichtung und Verfahren zur Ermittlung und/oder Überwachung von Prozessparametern von mit der Fertigungseinrichtung ausgeführten Lötungen**

Production device and method for determining and/or monitoring process parameters of joints created with said production device

Dispositif de fabrication et procédé de détermination et/ou de surveillance de paramètres de processus de soudures réalisées à l'aide du dispositif de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013 DE 102013114060**

(43) Veröffentlichungstag der Anmeldung:
**02.09.2015 Patentblatt 2015/36**

(73) Patentinhaber: **Endress+Hauser SE+Co. KG**
**79689 Maulburg (DE)**

(72) Erfinder:
• **Birgel, Dietmar**
**79650 Schopfheim (DE)**
• **Oschwald, Joachim**
**79669 Zell (DE)**
• **Glatz, Franz**
**79106 Freiburg (DE)**
• **Feucht, Michael**
**79686 Hasel (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**JP-B2- 3 456 112 US-A- 5 062 564**
**US-A1- 2009 071 945**

**Beschreibung**

Die Erfindung betrifft eine mit einem Lötroboter ausgestattete Fertigungseinrichtung, sowie ein damit ausführbares Verfahren, mit der bzw. mit dem mindestens eine Information über mindestens einen Prozessparameter von mit dem Lötroboter ausgeführten Lötungen ableitbar ist.

Verfahren und Fertigungseinrichtungen zur Ausführung von Lötungen mit einem Lötroboter werden in der industriellen Fertigung beispielsweise zur automatisierten Fertigung von selektiv zu verlötende Lötstellen aufweisenden Objekten eingesetzt.

Hierzu werden regelmäßig Fertigungseinrichtungen eingesetzt, die eine Arbeitsebene aufweisen, auf der der Fertigungseinrichtung die zu verlötende Lötstellen aufweisenden Objekte zugeführt werden. Über der Arbeitsebene ist eine mit einem Transportsystem für einen Lötroboter ausgestattete Trägereinrichtung angeordnet, an der der Lötroboter über der Arbeitsebene aufgehängt ist. Der Lötroboter umfasst eine Lotzufuhr und eine Löteinheit, z.B. einen Lötkolben oder einen Laserlötkopf.

Im laufenden Fertigungsbetrieb wird der Lötroboter mittels des Transportsystems derart über das auf der Arbeitsebene angeordnete Objekt hinweg bewegt, dass er die einzelnen zu verlötenden Lötstellen nacheinander anfährt, und auf der jeweiligen Lötstelle über die Lotzufuhr zugeführtes Lot mittels der Löteinheit aufschmilzt.

Vor der Inbetriebnahme solcher Fertigungseinrichtungen müssen Trägereinrichtung, Arbeitsebene und Lötroboter montiert und relativ zueinander möglichst genau positioniert, und Prozessparameter für die Ausführung der Lötungen festgelegt werden. Die Prozessparameter umfassen unter anderem das zu verwendende Lot, die Löttemperatur, die Lotmenge, die Geschwindigkeit mit der die Lotmenge der Löteinheit zugeführt wird, sowie die Lötdauer.

Für die Qualität der mit der Fertigungseinrichtung ausgeführten Lötungen ist es entscheidend, dass die tatsächlich bei den Lötungen vorliegenden Prozessparameter den vorgegebenen Prozessparametern möglichst genau entsprechen.

In Verbindung mit Reflowlötanlagen und Wellenlötanlagen können die dort relevanten Prozessparameter messtechnisch erfasst werden, indem Messungen mit einem mit Sensoren bestückten Messbord ausgeführt werden, während dieses die unter den für die Reflow- bzw. Wellenlötungen vorgesehenen Prozessparametern betriebene Anlage durchläuft. Auf diese Weise können beispielsweise Temperaturprofile von Reflowlötöfen aufgezeichnet werden, die den räumlichen Verlauf der Temperatur innerhalb des Ofens wiedergeben, sowie deren zeitliche Veränderungen über den Zeitraum des Lötverfahrens bestimmt werden.

Aufgrund der Wichtigkeit der Prozessparameter, wäre es wünschenswert Prozessparameter von mit Lötrobotern ausgeführten Lötungen ebenfalls messtechnisch erfassen zu können.

Dabei stellt sich unter anderem das Problem, dass die während des Lötvorgangs an der Lötstelle herrschende Temperatur in der Regel unbekannt ist. Ein Grund hierfür ist, dass Lötkolbenspitzen Verschleißteile sind, die mit der Zeit abnutzen, bzw. verdrecken, und daher regelmäßig ausgetauscht werden müssen. Um einen schnellen und einfachen Austausch der Spitzen zu ermöglichen, werden diese lösbar auf einem Heizelement montiert, über das die Spitze im Betrieb auf die Löttemperatur aufgeheizt wird. Die Temperatur an der Lötkolbenspitze kann somit nur indirekt, über die Heizleistung oder den Energieverbrauch des Heizelements, oder über einen in dem Heizelement vorgesehenen Temperatursensor erfasst werden. Die Temperatur an der Lötspitze ist jedoch abhängig von der Wärmeübertragung zur Lötspitze, so dass die indirekte Temperaturerfassung die Temperatur an der Spitze nicht exakt, und aufgrund der begrenzten Geschwindigkeit der Wärmeübertragung unter Umständen auch zeitverzögert wiedergibt.

Es ist bekannt, die Temperatur von Lötspitzen von Handlötkolben zu messen. Entsprechende Temperaturmessgeräte werden von dem japanischen Unternehmen Hakko unter den Produktbezeichnungen Hakko FG 100, Hakko FG 101 angeboten. Diese umfassen ein Thermoelement mit zwei miteinander an einem Verbindungspunkt verbundenen Leitern aus unterschiedlichen Metallen. Das Thermoelement ist auf Stützen auf einem Träger angeordnet, so dass der Verbindungspunkt einem definierten Abstand vom Träger aufweist. Hierdurch ist es möglich die Lötkolbenspitze des Handlötkolbens auf den Verbindungspunkt aufzusetzen, und deren Temperatur zu messen. Damit kann zwar überprüft werden, ob die Lötkolbenspitze die erforderliche Löttemperatur erreicht, weitere für die Lötung relevante Prozessparameter, wie die Wahl des Lotes, die zugeführte Lotmenge, die Lötdauer, und die Positionierung des Lötkolbens auf der Lötstelle können hierdurch jedoch nicht erfasst werden.

Ferner ist aus dem Stand der Technik die US 2009/0071945 A1 bekannt geworden, in der eine Bondvorrichtung umfassend einen Bondkopf mit einem Bondwerkzeug zum Ansaugen und Festhalten eines elektronischen Bauteils und eine Laserheizung zum Erhitzen des elektronischen Bauteils beschrieben wird.

Ebenfalls aus dem Stand der Technik ist die JP 3 456 112 B2 bekannt geworden, die eine Fertigungseinrichtung gemäß dem Oberbegriff von Anspruch 1 offenbart.

Es ist eine Aufgabe der Erfindung eine Fertigungseinrichtung mit einem Lötroboter und ein Verfahren anzugeben, mit der bzw. mit dem Information über Prozessparameter von mit Lötrobotern ausgeführten Lötungen ableitbar sind.

Hierzu umfasst die Erfindung eine Fertigungseinrichtung gemäß Anspruch 1.

Gemäß einer Ausgestaltung umfasst die Temperaturmesseinrichtung einen Temperatursensor, der sich im montierten Zustand auf einer Höhe relativ zur Arbeitsebene befindet, die derjenigen Höhe entspricht, in der sich im Fertigungsbetrieb die im Fertigungsbetrieb zu verlötenden Lötstellen der Objekte befinden.

Gemäß einer weiteren Ausgestaltung ist die Temperaturmesseinrichtung eine permanent in einem Teilbereich der Arbeitsebene angeordnete Einrichtung, oder eine bei Bedarf in die vorgegebene Position auf die Arbeitsebene zu bringende Einrichtung.

Gemäß einer weiteren Ausgestaltung umfasst der Temperatursensor ein auf Stützen auf einem Träger angeordnetes Thermoelement, das durch die Stützen vom Träger beabstandet ist.

Eine Weiterbildung der Erfindung umfasst eine Fertigungseinrichtung, bei der

- die Auswertungseinheit derart an die Steuerung angeschlossen ist, dass sie in Abhängigkeit von einem Ergebnis einer Auswertung mindestens eines Temperaturprofils eine Freischaltung oder eine Sperrung eines von der Fertigungseinrichtung aufzunehmenden Fertigungsbetriebs bewirkt.

Gemäß einer Ausgestaltung der Weiterbildung ist ein Expertenzugang vorgesehen, über den eine von der Auswertungseinheit bewirkte Sperrung des Fertigungsbetriebs aufhebbar ist.

Gemäß einer Weiterbildung ist ein an die Auswertungseinheit angeschlossenes Display und/oder mindestens ein an die Auswertungseinheit angeschlossenes Leuchtelement, insb. zwei oder drei eine Ampel bildende Leuchtelemente, vorgesehen, über das ein Ergebnis einer Auswertung mindestens eines Temperaturprofils anzeigbar ist.

Gemäß einer Ausgestaltung umfasst die Temperaturmesseinrichtung ein Testobjekt, auf dem Lötstellen angeordnet sind.

Weiter umfasst die Erfindung ein Verfahren zur Ableitung von mindestens einer Information über mindestens einen Prozessparameter einer mit dem Lötroboter einer erfindungsgemäßen Fertigungseinrichtung ausgeführten Lötung, bei dem

- der Lötroboter über der Temperaturmesseinrichtung positioniert wird,
- der Lötroboter anhand von der Fertigungseinrichtung vorgegebenen Prozessparametern eine Testlötung auf der Temperaturmesseinrichtung ausführt,
- anhand der von der Temperaturmesseinrichtung gemessenen Temperaturen ein Temperaturprofil abgeleitet wird, das die gemessenen Temperaturen als Funktion der Zeit über einen Zeitraum, insb. einen Zeitraum, der vor der Testlötung beginnt und nach einer an die Testlötung anschließenden Abkühlphase endet, wiedergibt, und
- anhand des Temperaturprofils mindestens eine Information über mindestens einen Prozessparameter abgeleitet wird

dadurch gekennzeichnet, dass ein vorgegebener Prozessparameter eine vorgegebene Stand-By Temperatur ist, die die Lötspitze der Löteinheit vor der Ausführung von Lötungen aufweisen soll, und überprüft wird, ob das Temperaturprofil einen ersten Bereich aufweist, in dem die Temperatur einen annähernd konstanten der tatsächlichen Stand-By-Temperatur entsprechenden Wert aufweist, und bei Vorliegen des ersten Bereichs anhand dieses Werts die Stand-By-Temperatur abgeleitet wird.

Eine Weiterbildung dieses Verfahrens umfasst ein Verfahren, bei dem

- ein vorgegebener Prozessparameter eine vorgegebene Positionierung des Lötroboters über der Temperaturmesseinrichtung ist, und ein unter dem Temperaturprofil eingeschlossener Flächeninhalt berechnet wird, und anhand eines Vergleichs dieses Flächeninhalts mit einem vorgegebenen Referenzwert, insb. einem Referenz-Flächeninhalt eines Temperaturprofils, das einen den vorgegebenen Prozessparametern entsprechenden Verlauf aufweist, ein Maß für eine Genauigkeit der Positionierung des Lötroboters über der Temperaturmesseinrichtung abgeleitet wird,
- ein vorgegebener Prozessparameter ein vorgegebener zu verwendender Lötspitzentyp ist, und überprüft wird, ob das Temperaturprofil einen zweiten Bereich aufweist, in dem die Temperatur auf einen Maximalwert ansteigt, und bei Vorliegen des zweiten Bereichs anhand dessen Steigung der verwendete Lotspitzentyp abgeleitet wird,
- ein vorgegebener Prozessparameter eine vorgegebene Löttemperatur ist, und überprüft wird, ob das Temperaturprofil einen zweiten Bereich aufweist, in dem die gemessene Temperatur auf einen der tatsächlichen Löttemperatur entsprechenden Maximalwert ansteigt, und bei Vorliegen des zweiten Bereichs anhand dessen Maximalwert die tatsächliche Löttemperatur abgeleitet wird,
- ein vorgegebener Prozessparameter eine vorgegebene Lötdauer ist, und überprüft wird, ob das Temperaturprofil einen an den zweiten auf den Maximalwert ansteigen Bereich anschließenden dritten Bereich aufweist, in dem die Temperatur innerhalb eines begrenzten den Maximalwert umfassenden Temperaturbereichs liegende Temperaturschwankungen aufweist, und bei Vorliegen des dritten Bereichs anhand dessen Dauer die Lötdauer abgeleitet wird und/oder anhand einer Amplitude der Temperaturschwankungen im dritten Bereich ein Maß für eine Qualität einer Anpassung einer Heizleistung der Löteinheit an einen von der Geschwindigkeit der Lotzuführung abhängigen Wärmeenergiebedarf abgeleitet wird,

- ein vorgegebener Prozessparameter ein vorgegebenes Lot ist, und überprüft wird, ob das Temperaturprofil einen an einen vierten Bereich, in dem die Temperatur absinkt, anschließenden plateauförmigen fünften Bereich aufweist, in dem die Temperatur einen annähernd konstanten einer Schmelztemperatur des Lots entsprechenden Wert aufweist, und bei Vorliegen dieses fünften Bereichs anhand dieses Werts die Schmelztemperatur des verwendeten Lots abgeleitet wird, und/oder
- ein vorgegebener Prozessparameter eine während der Lötung zuzuführende Lotmenge ist, und überprüft wird, ob das Temperaturprofil einen an einen vierten Bereich, in dem die Temperatur absinkt, anschließenden fünften Bereich aufweist, in dem die Temperatur einen annähernd konstanten der Schmelztemperatur des Lots entsprechenden Wert aufweist, und bei Vorliegen des fünften Bereichs anhand der Dauer des fünften Bereichs eine tatsächlich während der Testlötung zugeführte Lotmenge abgeleitet wird.

Gemäß einer Weiterbildung der letztgenannten Weiterbildung wird anhand der abgeleiteten Lötdauer und der abgeleiteten Lotmenge eine mittlere Geschwindigkeit der Lotzufuhr bestimmt.

Gemäß einer Ausgestaltung der letztgenannten oder der zu vorletzt genannten Weiterbildung wird ein Prozessfehler erkannt,

- wenn im Temperaturprofil mindestens einer der Bereiche fehlt, oder
- wenn mindestens ein abgeleiteter Prozessparameter von dem hierfür vorgegebenen Prozessparameter abweicht.

Gemäß einer Weiterbildung der erstgenannten Weiterbildung des erfindungsgemäßen Verfahrens

- wird eine Fehlpositionierung erkannt, wenn der unter dem Testprofil eingeschlossene Flächeninhalt von dem vorgegebenen Referenzwert um mehr als eine vorgegebene Differenz abweicht, und
- bei Vorliegen einer Fehlpositionierung werden keine Informationen über weitere Prozessparameter abgeleitet.

Gemäß einer Weiterbildung der erstgenannten Weiterbildung des erfindungsgemäßen Verfahrens

- wird die Fertigungseinrichtung für einen nachfolgend auszuführenden Fertigungsprozess gesperrt, wenn mindestens ein Prozessfehler erkannt wurde, oder
- wird anhand vorgegebener Kriterien ein Maß für eine zu erwartende Beeinträchtigung der Qualität von mit der Fertigungseinrichtung auszuführenden Lötungen aufgrund der erkannten Prozessfehler bestimmt, und die Fertigungseinrichtung für einen nachfolgend auszuführenden Fertigungsprozess gesperrt, wenn das ermittelte Maß einen für eine Einhaltung einer Mindestqualität erforderlichen Schwellwert überschreitet.

Weiter umfasst die Erfindung ein Verfahren zur Ermittlung und/oder Überwachung einer Prozessstabilität und/oder einer Reproduzierbarkeit von mit einer erfindungsgemäßen Fertigungseinrichtung ausgeführten Lötungen unter Verwendung des erfindungsgemäßen Verfahrens, bei dem

- zwei oder mehr Testlötungen auf der Temperaturmesseinrichtung ausgeführt werden,
- die zugehörigen Temperaturprofile aufgezeichnet werden, und
- Abweichungen zwischen den Temperaturprofilen und/oder aus den Temperaturprofilen abgeleitete Prozessparameter als Funktion der Zeit bestimmt werden, und anhand der als Funktion der Zeit bestimmten Abweichungen und/oder Prozessparameter die Prozessstabilität ermittelt und/oder überwacht wird, und/oder
- Abweichungen zwischen den Temperaturprofilen und/oder aus den Temperaturprofilen abgeleitete Prozessparameter als Funktion einer Anzahl von von der Fertigungseinrichtung ausgeführten Lötungen bestimmt werden, und anhand der als Funktion der Anzahl der ausgeführten Lötungen bestimmten Abweichungen und/oder Prozessparameter die Reproduzierbarkeit ermittelt und/oder überwacht wird.

Gemäß einer bevorzugten Ausgestaltung des letztgenannten Verfahrens führt der Lötroboter zwischen zwei aufeinanderfolgenden Testlötungen weitere Lötungen aus.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1 zeigt:    einen Ausschnitt einer Fertigungseinrichtung; und

Fig. 2 zeigt:    ein im Rahmen einer Testlötung mit der Fertigungseinrichtung von Fig. 1 aufgezeichnetes Temperaturprofil.

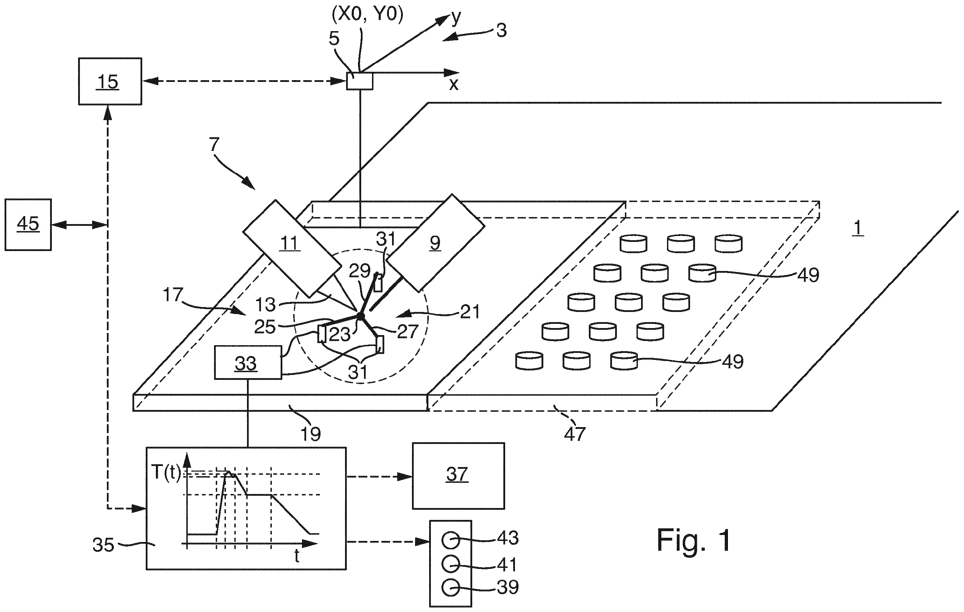

Fig. 1 zeigt eine Prinzipskizze eines Ausschnitts einer erfindungsgemäßen Fertigungseinrichtung. Die Fertigungseinrichtung weist eine Arbeitsebene 1 auf, auf der der Fertigungseinrichtung im laufenden Betrieb zu verlötende Lötstellen aufweisende Objekte zuführbar sind. Die Objekte sind zum Beispiel mit elektronischen Bauteilen zu bestückende Leiterplatten. Die Arbeitsebene 1 kann als starre Einrichtung ausgebildet sein, in die nacheinander zu verlötende Objekte eingelegt werden.

Alternativ kann sie als Transporteinrichtung, z.B. als Förderband, ausgebildet sein, auf der die Objekte über die Arbeitsebene 1 transportiert werden.

Über der Arbeitsebene 1 ist eine Trägereinrichtung 3 vorgesehen. Diese weist eine Aufhängung 5 für einen Lötroboter 7 auf. Die Trägereinrichtung 3 ist mit einem - hier schematisch durch Pfeile dargestellten Transportsystem (X,Y) ausgestattet, mit dem der daran aufgehängte Lötroboter 7 in einer parallel zur Arbeitsebene 1 verlaufenden Ebene transportierbar ist. Als Transportsystem (X, Y) kann beispielsweise ein rasterförmig aufgespanntes Transportschienengitternetz eingesetzt werden, in dem die Aufhängung 5 des Lötroboters 7 entlang der Schienen verschiebbar verankert ist.

Der Lötroboter 7 umfasst eine Lotzufuhr 9, über die er im Fertigungsbetrieb zu verlötenden Lötstellen Lot zuführt, und eine Löteinheit 11, mittels der er das über die Lotzufuhr 9 zugeführte Lot aufschmilzt. Die Lotzufuhr 11 umfasst hierzu beispielsweise einen mit einer Rolle mit darauf aufgewickeltem Lotdraht bestückbaren Vorratsbehälter und eine Vorschubeinrichtung, über die der Lotdraht ausgegeben wird. Die Löteinheit 11 ist ein mit einer auswechselbaren Lötspitze 13 ausgestatteter Lötkolben.

Die Fertigungseinrichtung umfasst eine Steuerung 15, über die die einzelnen Komponenten anhand vorgegebener Prozessparameter derart angesteuert werden, dass sie von ihnen auszuführende Verfahrensschritte durchführen. Die Steuerung 15 bewirkt insb., dass der Lötroboter 7 mittels des Transportsystems (X, Y) sukzessive in über die Steuerung 15 vorgegebene Positionen über der Arbeitsebene 1 transportiert wird, und dort jeweils eine Lötung ausführt.

Zu den für die Lötungen vorgegebenen Prozessparametern gehören insb.

- eine vorgegebene Stand-By-Temperatur $T^S_B$, auf der die Löteinheit 11 zwischen aufeinanderfolgenden Lötungen betrieben werden soll,
- eine Vorgabe eines zu verwendenden Lots,
- eine Vorgabe eines zu verwendenden Lötspitzentyps
- eine Vorgabe einer Geschwindigkeit mit der das Lot der Lötstelle zuzuführen ist,
- eine Vorgabe einer während eines Lötvorgangs der Lötstelle insgesamt zuzuführenden Lotmenge,
- eine Vorgabe einer Löttemperatur $T^S_L$, bei der das zugeführte Lot aufgeschmolzen werden soll, sowie
- eine Vorgabe einer Lötdauer $\Delta t^S_L$, während der zugeführtes Lot aufgeschmolzen werden soll.

Erfindungsgemäß umfasst die Fertigungseinrichtung eine Temperaturmesseinrichtung 17. Die Temperaturmesseinrichtung 17 ist vorzugsweise eine in einem Teilbereich der Arbeitsebene 1 fest installierte Einrichtung. Alternativ kann die Temperaturmesseinrichtung 17 als transportable Einrichtung ausgebildet sein, die bei Bedarf in eine definierte Position auf der Arbeitsebene 1 gebracht wird. Hierzu kann sie beispielsweise auf die gleiche Weise in die Fertigungseinrichtung eingebracht werden, wie die zu fertigenden Objekte. In diesem Fall weist die Fertigungsvorrichtung vorzugsweise einen entsprechenden Anschlag auf, durch den eine exakte Positionierung der Temperaturmesseinrichtung 17 sicher gestellt wird.

Die Temperaturmesseinrichtung 17 umfasst einen auf einem Träger 19, z.B. einer Leiterplatte, angeordneten Temperatursensor 21. Der Temperatursensor 21 ist derart anzuordnen, dass er sich in der Fertigungseinrichtung auf einer Höhe relativ zur Arbeitsebene 1 befindet, die gleich derjenigen Höhe ist, in der sich im Fertigungsbetrieb die zu verlötenden Lötstellen der Objekte befinden.

Der Temperatursensor 21 umfasst vorzugsweise ein Thermoelement, das zwei endseitig miteinander in einem Verbindungspunkt 23 verbundene Leiter 25, 27 aus unterschiedlichen Metallen aufweist. Hierzu eignet sich z.B. ein Nickel/Chrom - Nickel Thermoelement. Zusätzlich ist ein mit dem Verbindungspunkt 23 verbundener Spanndraht 29 vorgesehen. Die vom Verbindungspunkt 23 abgewandten Enden der Leiter 25, 27 und des Spanndrahts 29 sind jeweils auf einer auf dem Träger 19 angeordneten Stütze 31 angeordnet, so dass sich der Verbindungspunkt 23 in einem der Höhe der Stützen 31 entsprechenden Abstand oberhalb des Trägers 19 befindet. Durch diesen Abstand wird eine thermische Kopplung von Verbindungspunkt 23 und Träger 19 reduziert. Die Leiter 25, 27 und der damit über den Verbindungspunkt 23 verbundene Spanndraht 29 sind vorzugsweise als austauschbares Verschleißteil ausgebildet, das bei Bedarf ersetzt wird. Die vom Verbindungspunkt 23 abgewandten Enden der Leiter 25, 27 sind an eine Messschaltung 33 angeschlossen, die anhand der zwischen den Leitern 25, 27 anliegenden von der Temperatur am Verbindungspunkt 23 abhängigen Spannung die am Verbindungspunkt 23 herrschende Temperatur T bestimmt, und ein die gemessene Temperatur wiedergebendes Messsignal zur Verfügung stellt. Entsprechende Messschaltungen 33 sind Stand der Technik, und daher hier nicht im Detail beschrieben.

Thermoelemente bieten den Vorteil, dass sie eine schnelle Ansprechzeit aufweisen, und somit auch dann zuverlässige Messergebnisse liefern, wenn sich die Temperatur am Verbindungspunkt 23 zeitlich sehr schnell ändert. Darüber hinaus kann der Ort, an dem die Temperatur gemessen wird, durch die Positionierung des Verbindungspunkts 23 und dessen geringe Größe räumlich präzise vorgegeben werden.

Mit dieser Fertigungseinrichtung ist ein erfindungsgemäßes Verfahren ausführbar, mit dem mindestens eine Information über mindestens einen Prozessparameter einer mit dem Lötroboter 7 ausgeführten Lötung ableitbar ist.

Dabei wird mit dem Lötroboter 7 anhand der vorgegebenen mittels der Steuerung 15 umgesetzten Prozessparameter eine Testlötung auf der Temperaturmesseinrichtung 17 ausgeführt. Hierzu wird der Lötroboter 7 in eine vorgegebene Position $(X_0, Y_0)$ über der Arbeitsebene 1 gebracht, unter der sich bei korrekter Positionierung des Lötroboters 7 die Temperaturmesseinrichtung 17 befindet. In dem dargestellten Ausführungsbeispiel ist die Position $(X_0, Y_0)$ derart vorgegeben, dass die Löteinheit 11 und die Lotzufuhr 9 auf den Verbindungspunkt 23 ausgerichtet sind.

An die Temperaturmesseinrichtung 17 ist eine Auswertungseinheit 35 angeschlossen, die die während der jeweiligen Testlötung von der Temperaturmesseinrichtung 17 gemessenen Temperaturen T als Funktion der Zeit t aufzeichnet. Hierzu wird die Temperatur T(t) bei jeder Testlötung vorzugsweise über einen Zeitraum erfasst, der vor der Testlötung beginnt und nach einer an die Testlötung anschließenden Abkühlphase endet.

Die Auswertungseinheit 35 erstellt anhand der in diesem Zeitraum gemessenen Temperaturen T ein Temperaturprofil T(t), das die gemessenen Temperaturen T als Funktion der Zeit t über diesem Zeitraum wiedergibt, und leitet hieraus mindestens eine Information über mindestens einen Prozessparameter der mit dem Lötroboter 7 ausgeführten Testlötung ab.

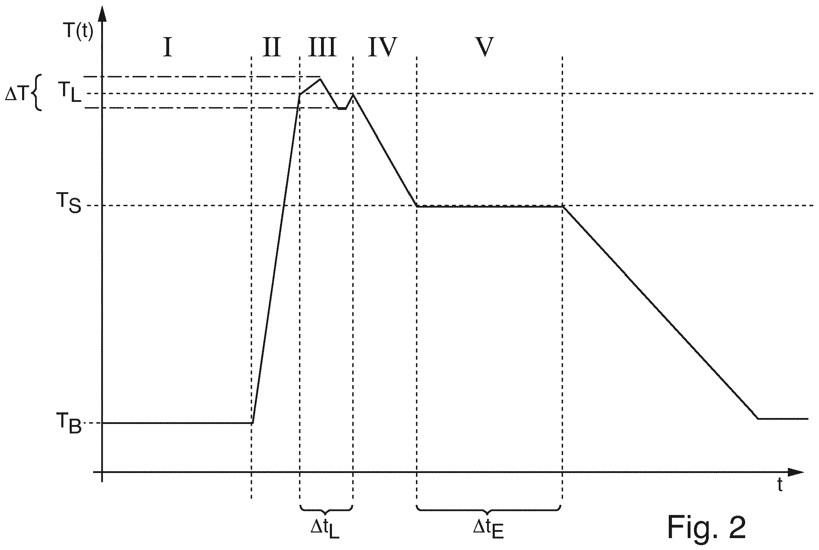

Fig. 2 zeigt einen typischen Verlauf eines solchen Temperaturprofils T(t). Vor der Testlötung befindet sich der Lötroboter 7 im Stand-By Betrieb. Dabei soll die Lötspitze 13 eine für den Stand-By Betrieb vorgegebene Stand-By-Temperatur $T^S_B$ aufweisen, die unterhalb der vorgegebenen Löttemperatur $T^S_L$ und unterhalb der Schmelztemperatur $T^S_S$ des vorgegebenen Lots liegt. Dementsprechend weist das Temperaturprofil T(t) einen ersten Bereich I auf, in dem die gemessene Temperatur T annähernd konstant ist, und der tatsächlich vorliegenden Stand-By Temperatur $T_B$ entspricht.

Die Auswertungseinheit 35 überprüft, ob das Temperaturprofil T(t) der Testlötung einen ersten Bereich I aufweist, in dem die gemessene Temperatur T einen annähernd konstanten der tatsächlichen Stand-By-Temperatur $T_B$ entsprechenden Wert aufweist. Ist das der Fall, bestimmt sie anhand dieses Werts die Stand-By-Temperatur $T_B$, die die Lötspitze 13 vor der Testlötung aufgewiesen hat.

Wenn das Temperaturprofil T(t) keinen solchen ersten Bereich I aufweist, oder die tatsächliche Stand-By-Temperatur $T_B$ von der vorgegebenen Stand-By-Temperatur $T^S_B$ abweicht, liegt ein Prozessfehler vor, der von der Auswertungseinheit 35 erkannt wird.

Unmittelbar vor dem Lötvorgang soll die Löteinheit 11 auf die vorgegebene Löttemperatur $T^S_L$ aufgeheizt werden. Entsprechend weist das Temperaturprofil T(t) einen zweiten Bereich II auf, in dem die gemessene Temperatur T steil ansteigt, und am Ende des Anstiegs einen der Löttemperatur $T_L$ entsprechenden Maximalwert erreicht.

Die Auswertungseinheit 35 überprüft, ob das Temperaturprofil T(t) der Testlötung einen solchen zweiten Bereich (II) aufweist. Ist das der Fall, wird überprüft, ob die am Ende des Anstiegs tatsächlich erreichte Löttemperatur $T_L$ der vorgegeben Löttemperatur $T^S_L$ entspricht. Weist das Temperaturprofil T(t) keinen steil ansteigenden zweiten Bereich II auf, oder entspricht die erreichte Löttemperatur $T_L$ nicht der vorgegeben Löttemperatur $T^S_L$ wird ein Prozessfehler erkannt.

Vorzugsweise wird zusätzlich die Steigung des Temperaturanstiegs im zweiten Bereich (II) ermittelt, und hieraus auf den tatsächlich verwendeten Lötspitzentyp zurück geschlossen. Die Steigung des Anstiegs ist abhängig von der Heizleistung der Löteinheit 11 und der Wärmekapazität der verwendeten Lötspitze 13. Wird eine kleine dünne Lötspitze verwendet, ist die Steigung größer, als wenn eine größere dickere Lötspitze verwendet wird. Geht man von einer unveränderlichen Heizleistung aus, so ist die Steigung charakteristisch für den verwendeten Lötspitzentyp. Um anhand der Steigung auf den verwendeten Lötspitzentyp zurück schließen zu können, werden vorab Referenzmessungen ausgeführt, bei denen Testlötungen mit unterschiedlichen Lötspitzentypen ausgeführt werden. Anhand der Temperaturprofile der Referenzmessungen wird für die einzelnen zur Auswahl stehenden Lötspitzentypen jeweils die zugehörige charakteristische Steigung bestimmt, und in der Auswertungseinheit 35 abgespeichert. Letztere ermittelt dann denjenigen Lötspitzentyp als aktuell verwendeten Lötspitzentyp, dessen charakteristische Steigung der im aktuellen Temperaturprofil T(t) vorliegenden Steigung am nächsten kommt.

Entspricht dieser Lötspitzentyp nicht dem vorgegebenen Lötspitzentyp, liegt ein Prozessfehler vor, der von der Auswertungseinheit 35 erkannt wird.

Nach dem Erreichen der Löttemperatur $T_L$ wird die Lötung ausgeführt. Während der Dauer der Lötung wird Lot mittels der Lotzufuhr 9 zugeführt und aufgeschmolzen. Dabei nimmt das zugeführte Lot die von der Löteinheit 11 zugeführte Wärmeenergie auf.

Dementsprechend weist das Temperaturprofil T(t) einen dritten Bereich III auf, in dem Temperaturschwankungen in der Umgebung der Löttemperatur $T_L$ auftreten. Die Temperaturschwankungen sind umso geringer, je besser es gelingt, die Heizleistung der Löteinheit 11 in Anpassung an den von der Geschwindigkeit der Lotzufuhr 9 abhängigen Wärmeenergiebedarf zu regeln. Bei idealer Anpassung wäre die Temperatur T während der Lötdauer $\Delta t_L$ gleich der Löttemperatur $T_L$. Typischer Weise sinkt die Temperatur T jedoch mit Einsetzen der Lotzufuhr aufgrund der Wärmeenergieaufnahme des Lots unter die Löttemperatur $T_L$ ab, und steigt am Ende der Lötdauer $\Delta t_L$, also nach der Beendigung der Lotzuführung, wieder an. Die Amplitude $\Delta T$ der Temperaturschwankungen ist somit ein Maß für die Qualität der Anpassung der Heizleistung der Löteinheit 11 an den von der Geschwindigkeit der Lotzuführung abhängigen Wärmeenergiebedarf.

Entsprechend kann mit der Auswertungseinheit 35 überprüft werden, ob das Temperaturprofil T(t) der Testlötung einen dritten Bereich III aufweist, in dem Temperaturschwankungen in der Umgebung der Löttemperatur $T_L$ auftreten. Ist das der Fall, wird die Dauer dieses Bereichs als die tatsächliche Lötdauer $\Delta t_L$ ermittelt. Vorzugsweise wird die Amplitude $\Delta T$ der Temperaturschwankungen als Maß für die Qualität der Anpassung der Heizleistung der Löteinheit 11 an den von der Geschwindigkeit der Lotzuführung abhängigen Wärmeenergiebedarf ermittelt.

Die Auswerteinheit 35 erkennt das Vorliegen eines Prozessfehlers, wenn das Temperaturprofil T(t) keinen dritten Bereich III aufweist, wenn die tatsächliche Lötdauer $\Delta t_L$ von der vorgegebenen Lötdauer $\Delta t^S_L$ abweicht, sowie wenn die Amplitude $\Delta T$ der Temperaturschwankungen einen vorgegeben Schwellwert übersteigt.

Im Anschluss an die Lötung wird die Löteinheit 11 wieder in den Stand-By Betrieb versetzt. Entsprechend kühlt das noch flüssige Lot auf dem Temperatursensor 21 ab. Dabei sinkt die Temperatur T zunächst kontinuierlich ab, bis sie die Schmelztemperatur Ts des verwendeten Lots erreicht. Dies ist in dem vierten Bereich IV des Temperaturprofils T(t) dargestellt. Mit dem Erreichen der Schmelztemperatur Ts beginnt das Lot zu erstarren. Bei diesem Phasenübergang wird Wärmeenergie umgesetzt. Das spiegelt sich im Temperaturprofil T(t) durch einen plateauförmigen fünften Bereich V wieder, in dem die Temperatur T während der Dauer des Phasenübergangs annähernd konstant und gleich der Schmelztemperatur $T_S$ des Lots ist.

Entsprechend kann mit der Auswertungseinheit 35 überprüft werden, ob das Temperaturprofil T(t) einen plateauförmigen fünften Bereich V aufweist. Enthält das Temperaturprofil T(t) keinen plateauförmigen fünften Bereich V, so wird dies als Prozessfehler erkannt. Enthält das Temperaturprofil T(t) einen plateauförmigen fünften Bereich V, entspricht die Temperatur, auf der der plateauförmige fünfte Bereich V verläuft, der Schmelztemperatur $T_S$ des tatsächlich verwendeten Lots. Die Schmelztemperatur $T_S$ ist eine charakteristische physikalische Eigenschaft des Lots. Unterschiedliche Lote weisen regelmäßig unterschiedliche Schmelztemperaturen $T_S$ auf. Dementsprechend kann die Auswertungseinheit 35 anhand der Schmelztemperatur Ts des tatsächlich verwendeten Lots und der Schmelztemperatur $T^S_S$ des zu verwendenden Lots überprüfen, ob das tatsächlich verwendete Lot, dem vorgegebenen Lot entspricht. Wurde die Lotzufuhr 9 versehentlich mit einem anderen als dem vorgegebenen Lot bestückt, so wird dieser Prozessfehler erkannt, und kann behoben werden.

Der Zeitraum $\Delta t_E$, über den sich der plateauförmige fünfte Bereich V erstreckt, entspricht der Zeit, die für die Erstarrung benötigt wird. Diese ist abhängig von der Lotmenge, die vom flüssigen in den festen Zustand übergeht. Entsprechend ist der Zeitraum $\Delta t_E$, über den sich der plateauförmige fünfte Bereich V erstreckt, ein Maß für die zugeführte Lotmenge. Um die im Rahmen von Testlötungen ermittelten Zeiträumen $\Delta t_E$ einer entsprechende Lotmenge zuordnen zu können, werden vorab Referenzmessungen ausgeführt. Dabei werden Testlötungen ausgeführt, die sich ausschließlich durch die während der Lötung zugeführte Lotmenge unterscheiden. Anhand dieser Referenzmessungen kann dann eine Kennlinie bestimmt werden, die den Zeiträumen $\Delta t_E$ jeweils die zugehörige Lotmenge zuordnet. Anhand dieser Kennlinie kann die Auswertungseinheit 35 dann jedem im Rahmen einer Testlötung bestimmten Zeitraum $\Delta t_E$ die während dieser Testlötung zugeführte Lotmenge zuordnen, und diese mit dem hierfür vorgegebenen Sollwert vergleichen.

Weicht die auf diese Weise ermittelte zugeführte Lotmenge von der vorgegebenen Lotmenge ab, so wird ein Prozessfehler erkannt.

Konnten anhand eines Temperaturprofils T(t) sowohl die tatsächlich insgesamt zugeführte Lotmenge, als auch die tatsächliche Lötdauer $\Delta t_L$ bestimmt werden, so kann hieraus eine mittlere Geschwindigkeit der Lotzufuhr als Quotient aus der tatsächlich insgesamt zugeführten Lotmenge und der tatsächlichen Lötdauer $\Delta t_L$ bestimmt werden. Weicht die mittlere Geschwindigkeit von der vorgegebenen Geschwindigkeit ab, so wird auch hier ein Prozessfehler erkannt.

Darüber hinaus kann die Auswertungseinheit 35 anhand des Temperaturprofils T(t) die Positionierung des Lötroboters (7) durch die Transporteinrichtung (X,Y) der Trägereinrichtung 3 überprüfen. Wenn die tatsächliche Position des Lötroboters 7 während der Testlötung von der für die Ausführung der Testlötung auf der Temperaturmesseinrichtung 17 vorgegebenen Position ($X_0$, $Y_0$) abweicht, so findet die Testlötung nicht mehr unmittelbar auf dem Verbindungspunkt 23 auf der Temperaturmesseinrichtung 17 statt. Dementsprechend liegen bei einer Fehlpositionierung alle während der Testlötung gemessenen Temperaturen T unterhalb der an der Lötstelle tatsächlich vorliegenden Temperaturen. Je größer der Abstand zwischen der vorgegebenen Position ($X_0$, $Y_0$) und der tatsächlich aufgrund einer Fehlpositionierung eingenommenen Position ist, umso niedriger sind die gemessenen Temperaturen im Vergleich zu den an der Lötstelle vorliegenden Temperaturen.

Zur Überprüfung der Positionierung kann beispielsweise ein unter dem Temperaturprofil eingeschlossener Flächeninhalt berechnet, und mit einem vorgegebenen Referenzwert verglichen werden. Als Referenzwert kann hierzu ein numerisch berechneter Referenz-Flächeninhalt eingesetzt werden, der unter einem Temperaturprofil eingeschlossen ist, dessen Bereiche alle einen den vorgegebenen Prozessparametern entsprechenden Verlauf aufweisen.

Da ein bei einer Fehlpositionierung aufgezeichnetes Temperaturprofil T(t) die Temperatur an der Lötstelle nicht korrekt wiedergibt, sollten hieraus keine Informationen über weitere Prozessparameter abgeleitet werden. Dementsprechend sollte bei jeder Testlötung zuerst überprüft werden, ob eine Fehlpositionierung vorliegt, und Informationen über weitere Prozessparameter auf die oben beschriebenen Weisen nur dann aus dem Temperaturprofil T(t) abgeleitet werden, wenn keine Fehlpositionierung festgestellt werden konnte.

Das erfindungsgemäße Verfahren zur Ableitung von Informationen über Prozessparameter wird vorzugsweise vor jeder Inbetriebnahme, bei jeder Veränderung des von der Fertigungseinrichtung auszuführenden Fertigungsprozesses, sowie vorzugsweise nach jeder Unterbrechung des laufenden Fertigungsprozesses ausgeführt. Unterbrechungen treten zum Beispiel auf, wenn die Fertigungseinrichtung, z.B. aus personaltechnischen Gründen, nicht permanent Tag und Nacht betrieben wird. Darüber hinaus treten Unterbrechungen auch dann auf, wenn die Fertigungseinrichtung gewartet wird, Verschleißteile, wie z.B. Lötspitzen ausgetauscht werden, oder der Lotvorrat der Lotzufuhr 9 aufgefüllt wird.

Wurde anhand des Verfahrens kein Prozessfehler erkannt, so kann die Fertigungseinrichtung in Betrieb genommen werden. Hierzu kann die Auswertungseinheit 35 der Steuerung 15 eine entsprechende Freigabe erteilen. Alternativ oder zusätzlich hierzu kann die Auswertungseinheit 35 das Ergebnis ihrer Auswertung über ein Display 37 und/oder eine entsprechende Signalleuchte 39 anzeigen.

Wurde mindestens ein Prozessfehler erkannt, so werden die erkannten Prozessfehler dem Betreiber übermittelt. Hierzu kann das Ergebnis der Auswertung auf dem Display 37 angezeigt werden. Soweit sich die Prozessfehler auf ermittelte Prozessparameter beziehen, wird vorzugsweise auch der Grad der Abweichung des jeweiligen Prozessparameters von dem dafür vorgegebenen Sollwert angezeigt. Alternativ oder zusätzlich wird das Vorliegen mindestens eines Prozessfehlers durch eine entsprechende Signalleuchte 41, 43 angezeigt.

Parallel dazu kann die Auswertungseinheit 35 derart an die Steuerung 15 angekoppelt sein, dass sie die Aufnahme des Fertigungsbetriebs durch die Steuerung 15 über ein entsprechendes Sperrsignal verhindert.

Alternativ hierzu kann die Auswertungseinheit 35 anhand vorgegebener Kriterien ein Maß für eine aufgrund der erkannten Prozessfehler zu erwartende Beeinträchtigung der Qualität der mit der Fertigungseinrichtung auszuführenden Lötungen bestimmen. Hierzu können die einzelnen Prozessfehler entsprechend ihrer Relevanz für die Qualität der Lötungen unterschiedlich gewichtet werden. Dabei wird berücksichtigt, dass größere Abweichungen von Prozessparametern von den zugehörigen vorgegebenen Prozessparametern die Qualität stärker beeinträchtigen als kleinere Abweichungen.

Übersteigt das Maß einen für die Einhaltung einer Mindestqualität erforderlichen Schwellwert, wird eine Freigabe der Fertigungseinrichtung vorzugsweise auf die oben beschriebene Weise unterbunden.

Liegt es unterhalb des Schwellwerts, kann eine Freigabe der Fertigungseinrichtung erteilt werden. Parallel zur Freigabe wird vorzugsweise, z.B. über das Display 37 und/oder eine Signalleuchte 41 eine entsprechende Warnung angezeigt.

Die Signalleuchten 39, 41, 43 bilden vorzugsweise eine Ampel. Diese umfasst eine grüne Signalleuchte 39, die die Freigabe signalisiert, und eine rote Signalleuchte 43, die die Sperrung der Fertigungseinrichtung anzeigt. Vorzugsweise ist zusätzlich eine gelbe Signalleuchte 41 vorgesehen, die dann aufleuchtet, wenn zwar mindestens ein Prozessfehler festgestellt wurde, die Prozessfehler insgesamt jedoch die Einhaltung der Mindestqualität nicht gefährden.

Die Fertigungseinrichtung kann einen Expertenzugang 45 aufweisen, über den die Fertigungseinrichtung auch dann frei gegeben und in Betrieb genommen werden kann, wenn Prozessfehler erkannt wurden. Dieser ist vorzugsweise mit einer Schutzvorrichtung ausgestattet, die sicher stellt, dass die Freigabe nur in Kenntnis der gefundenen Prozessfehler und vorzugsweise nur durch entsprechend qualifizierte Personen erteilt werden kann. Hierzu kann der Expertenzugang 45 unter Verschluss angeordnet, oder durch ein Passwort geschützt sein, und eine Anzeige aufweisen, über die dem Benutzer die Prozessfehler zwangsweise zur Kenntnis gebracht werden, bevor er die Fertigungseinrichtung freischalten kann.

Das erfindungsgemäße Verfahren kann darüber hinaus dazu eingesetzt werden, um eine Prozessstabilität und/oder eine Reproduzierbarkeit von mit der Fertigungseinrichtung ausgeführten Lötungen zu ermitteln und/oder zu überwachen. Die Prozessstabilität ist umso höher, je langsamer die Prozessparameter sich mit der Zeit verändern. Die Reproduzierbarkeit ist umso größer, je größer die Anzahl der Lötungen vergleichbarer Qualität ist, die die Fertigungseinrichtung nacheinander ausführen kann. Darüber hinaus ist sie umso größer, je weniger die Prozessparameter, unter denen diese Lötungen ausgeführt werden, voneinander abweichen.

Zur Ermittlung und/oder Überwachung von Prozessstabilität und/oder Reproduzierbarkeit werden nacheinander zwei oder mehr Testlötungen i auf der Temperaturmesseinrichtung 17 ausgeführt, und die zugehörigen Temperaturprofile $T_i(t)$ mittels der Auswertungseinheit 35 aufgezeichnet und abgespeichert.

Vorzugsweise führt die Fertigungseinrichtung zwischen den einzelnen Testlötungen i weitere Lötungen aus.

Soll die Ermittlung vor der Aufnahme des Fertigungsbetriebs erfolgen, können die weiteren Lötungen mit dem Lötroboter 7 auf einem Testobjekt 47 ausgeführt werden, das entsprechend viele Lötstellen aufweist. Das Testobjekt 47 kann hierzu auf die gleiche Weise in die Fertigungseinrichtung eingebracht und verlötet werden, wie die im Fertigungsbetrieb zu verlötenden Objekte. Alternativ kann das Testobjekt 47, wie in Fig. 1 durch gestrichelte Linien dargestellt, in der Temperaturmesseinrichtung 17 integriert sein, in dem ein ausreichend großer Träger 19 eingesetzt wird, auf dem neben der Temperaturmesseinrichtung 17 eine Anzahl von Lötstellen 49 vorgesehen sind.

Sollen Prozessstabilität und/oder Reproduzierbarkeit im laufenden Fertigungsbetrieb ermittelt und/oder überwacht werden, sind die weiteren Lötungen vorzugsweise mit dem Lötroboter 7 im laufenden Fertigungsbetrieb auf zu fertigenden Objekts ausgeführte Lötungen.

Die Ermittlung von Prozessstabilität und/oder Reproduzierbarkeit erfolgt durch einen Vergleich der anhand der Testlötungen aufgezeichneten Testprofile $T_i(t)$. Prozessstabilität und Reproduzierbarkeit sind umso größer, je geringer die Abweichungen $\Delta_{i,j}$ zwischen den einzelnen Testprofilen $T_i(t)$ sind. Die Abweichung $\Delta_{i,j}$ zwischen zwei Testprofilen $T_i(t)$ und $T_j(t)$ kann beispielsweise als Integral über den Betrag der Differenz der Temperaturwerte T der beiden Testprofile $T_i(t)$, $T_j(t)$ gemäß:

$$\Delta_{i,j} = \int dt \left| T_i(t) - T_j(t) \right|$$

quantitativ erfasst werden. Anhand der Abweichungen $\Delta_{i,j}$ können mit der Zeit eintretende Veränderungen des Prozesses ermittelt werden, indem die Abweichungen $\Delta_{i,j}$ in Abhängigkeit von den Zeiten, zu denen die zugehörigen Testlötungen i ausgeführt wurden, erfasst und ausgewertet werden. Die zeitliche Entwicklung der Abweichungen $\Delta_{i,j}$ gibt die Prozessstabilität wieder. Alternativ oder zusätzlich können die Abweichungen $\Delta_{i,j}$ in Abhängigkeit von der Anzahl der zwischen den einzelnen Testlötungen i ausgeführten weiteren Lötungen erfasst und ausgewertet werden. Die Reproduzierbarkeit ergibt sich aus der Entwicklung der Abweichungen $\Delta_{i,j}$ in Abhängigkeit von der Anzahl der zwischen den Testlötungen i ausgeführten weiteren Lötungen.

Vorzugsweise werden für jedes Testprofil $T_i(t)$ auf die oben beschriebene Weise Informationen über die Prozessparameter abgeleitet, die bei der jeweiligen Testlötung i vorlagen. Diese Prozessparameter können dann in Abhängigkeit von Zeiten zu denen die zugehörigen Testlötungen i ausgeführt wurden, oder in Abhängigkeit von der Anzahl der zwischen den einzelnen Testlötungen i ausgeführten weiteren Lötungen erfasst und ausgewertet werden. Hierdurch kann die Prozessstabilität und die Reproduzierbarkeit des Fertigungsprozesses bezüglich der einzelnen Prozessparameter ermittelt und fortlaufend überprüft werden.

| 1 | Arbeitsebene |
|---|---|
| 3 | Trägereinrichtung |
| 5 | Aufhängung |
| 7 | Lötroboter |
| 9 | Lotzufuhr |
| 11 | Löteinheit |
| 13 | Lötspitze |
| 15 | Steuerung |
| 17 | Temperaturmesseinrichtung |
| 19 | Träger |
| 21 | Temperatursensor |
| 23 | Verbindungspunkt |
| 25 | Leiter |
| 27 | Leiter |

| 29 | Spanndraht |
|---|---|
| 31 | Stütze |
| 33 | Messschaltung |
| 35 | Auswertungseinheit |
| 37 | Display |
| 39 | grüne Signalleuchte |
| 41 | gelbe Signalleuchte |
| 43 | rote Signalleuchte |
| 45 | Expertenzugang |
| 47 | Testobjekt |
| 49 | Lötstelle |

**Patentansprüche**

1. Fertigungseinrichtung, mit

- einer Arbeitsebene (1), auf der der Fertigungseinrichtung zu verlötende Lötstellen aufweisende Objekte, insb. Leiterplatten, zuführbar sind,
- einer über der Arbeitsebene (1) angeordneten mit einem Transportsystem ausgestatte Trägereinrichtung (3), und
- einem an der Trägereinrichtung befestigten, mittels des Transportsystems parallel zur Arbeitsebene über die Arbeitsebene hinweg transportierbaren Lötroboter (7), wobei der Lötroboter (7) eine Lotzufuhr (9) und eine Löteinheit (11), welche ein mit einer auswechselbaren Lötspitze (13) ausgestatteter Lötkolben ist, aufweist, **dadurch gekennzeichnet, dass**
- eine Steuerung (15) vorgesehen ist, die dazu eingerichtet ist, die Fertigungseinrichtung anhand vorgegebener Prozessparameter zu steuern, um Testlötungen mit einem vorgegebenen Lot durchzuführen,

wobei einer der vorgegebenen Prozessparameter eine vorgegebene Stand-By-Temperatur ($T^S_B$) ist, die unterhalb der vorgegebenen Löttemperatur ($T^S_L$) und unterhalb der Schmelztemperatur ($T^S_S$) des vorgegebenen Lots liegt,

- eine auf der Arbeitsebene (1) in einer vorgegebenen Position anzuordnende Temperaturmesseinrichtung (17) vorgesehen ist, auf der mit dem Lötroboter (7) Testlötungen ausführbar sind, und
- eine an die Temperaturmesseinrichtung (17) angeschlossene Auswertungseinheit (35) vorgesehen ist, die dazu eingerichtet ist, dazu zu dienen anhand der von der Temperaturmesseinrichtung (17) bei Testlötungen gemessenen Temperaturen (T) jeweils ein Temperaturprofil (T(t)) als Funktion der Zeit (t) abzuleiten und auszuwerten,

wobei die Auswertungseinheit (35) ist dazu eingerichtet zu überprüfen, ob das Temperaturprofil T(t) der Testlötung einen ersten Bereich (I) aufweist, in dem die gemessene Temperatur (T) einen annähernd konstanten der tatsächlichen Stand-By-Temperatur ($T_B$) entsprechenden Wert aufweist und wenn das der Fall ist, die Auswertungseinheit (35) dazu eingerichtet ist, anhand dieses Werts die Stand-By-Temperatur ($T_B$), die die Lötspitze (13) vor der Testlötung aufgewiesen hat, zu bestimmen und wenn

das Temperaturprofil T(t) keinen solchen ersten Bereich (I) aufweist, oder die tatsächliche Stand-By-Temperatur ($T_B$) von der vorgegebenen Stand-By-Temperatur ($T^S_B$) abweicht, die Auswertungseinheit (35) dazu eingerichtet ist, einen Prozessfehler zu erkennen.

2. Fertigungseinrichtung nach Anspruch 1, **dadurch gekennzeichnet, dass**
die Temperaturmesseinrichtung (17) einen Temperatursensor (21) umfasst, der sich im montierten Zustand auf einer Höhe relativ zur Arbeitsebene (1) befindet, die derjenigen Höhe entspricht, in der sich im Fertigungsbetrieb die im Fertigungsbetrieb zu verlötenden Lötstellen der Objekte befinden.

3. Fertigungseinrichtung nach Anspruch 1, **dadurch gekennzeichnet, dass**

   - die Temperaturmesseinrichtung (17) ein permanent in einem Teilbereich der Arbeitsebene (1) angeordnete Einrichtung ist, oder
   - die Temperaturmesseinrichtung (17) eine bei Bedarf in die vorgegebene Position auf die Arbeitsebene (1) zu bringende Einrichtung ist.

4. Fertigungseinrichtung nach Anspruch 2, **dadurch gekennzeichnet, dass** der Temperatursensor (21) ein auf Stützen (31) auf einem Träger (19) angeordnetes Thermoelement umfasst, das durch die Stützen (31) vom Träger (19) beabstandet ist.

5. Fertigungseinrichtung nach Anspruch 1, **dadurch gekennzeichnet, dass**

   - die Auswertungseinheit (35) derart an die Steuerung (15) angeschlossen ist, dass sie in Abhängigkeit von einem Ergebnis einer Auswertung mindestens eines Temperaturprofils (T(t), Ti(t)) eine Freischaltung oder eine Sperrung eines von der Fertigungseinrichtung aufzunehmenden Fertigungsbetriebs bewirkt.

6. Fertigungseinrichtung nach Anspruch 5, **dadurch gekennzeichnet, dass**
ein Expertenzugang (45) vorgesehen ist, über den eine von der Auswertungseinheit (35) bewirkte Sperrung des Fertigungsbetriebs aufhebbar ist.

7. Fertigungseinrichtung nach Anspruch 1, **dadurch gekennzeichnet, dass**
ein an die Auswertungseinheit (35) angeschlossenes Display (37) und/oder mindestens ein an die Auswertungseinheit (35) angeschlossenes Leuchtelement (39, 41, 43), insb. zwei oder drei eine Ampel bildende Leuchtelemente (39, 41, 43), vorgesehen ist, über das ein Ergebnis einer Auswertung mindestens eines Temperaturprofils (T(t), Ti(t)) anzeigbar ist.

8. Fertigungseinrichtung nach Anspruch 1, **dadurch gekennzeichnet, dass**
die Temperaturmesseinrichtung (17) ein Testobjekt (47) umfasst, auf dem Lötstellen (49) angeordnet sind.

9. Verfahren zur Ableitung mindestens einer Information über mindestens einen Prozessparameter einer mit dem Lötroboter (7) einer Fertigungseinrichtung gemäß einem der vorangehenden Ansprüche ausgeführten Lötung, **dadurch gekennzeichnet, dass**

   - der Lötroboter (7) über der Temperaturmesseinrichtung (17) positioniert wird,
   - der Lötroboter (7) anhand von der Fertigungseinrichtung vorgegebenen Prozessparametern eine Testlötung auf der Temperaturmesseinrichtung (17) ausführt,
   - anhand der von der Temperaturmesseinrichtung (17) gemessenen Temperaturen (T) ein Temperaturprofil (T(t)) abgeleitet wird, das die gemessenen Temperaturen (T) als Funktion der Zeit (t) über einen Zeitraum, insb. einen Zeitraum, der vor der Testlötung beginnt und nach einer an die Testlötung anschließenden Abkühlphase endet, wiedergibt, und
   - anhand des Temperaturprofils (T(t)) mindestens eine Information über mindestens einen Prozessparameter abgeleitet wird,

   **dadurch gekennzeichnet, dass**
   ein vorgegebener Prozessparameter eine vorgegebene Stand-By Temperatur ($T^S_B$) ist, die die Lötspitze (13) der Löteinheit (11) vor der Ausführung von Lötungen aufweisen soll, und überprüft wird, ob das Temperaturprofil (T(t)) einen ersten Bereich (I) aufweist, in dem die Temperatur (T) einen annähernd konstanten der tatsächlichen Stand-By-Temperatur ($T_B$) entsprechenden Wert aufweist, und bei Vorliegen des ersten Bereichs (I) anhand dieses Werts die Stand-By-Temperatur ($T_B$) abgeleitet wird.

10. Verfahren nach Anspruch 9, **dadurch gekennzeichnet, dass**

   - ein vorgegebener Prozessparameter eine vorgegebene Positionierung (X0, Y0) des Lötroboters (7) über der Temperaturmesseinrichtung (17) ist, und ein unter dem Temperaturprofil (T(t)) eingeschlossener Flächeninhalt berechnet wird, und anhand eines Vergleichs dieses Flächeninhalts mit einem vorgegebenen Referenzwert, insb. einem Referenz-Flächeninhalt eines Temperaturprofils, das einen den vorgegebenen Prozessparametern entsprechenden Verlauf aufweist, ein Maß für eine Genauigkeit der Positionierung des Lötroboters (7) über der Temperaturmesseinrichtung (17) abgeleitet wird,

- ein vorgegebener Prozessparameter ein vorgegebener zu verwendender Lötspitzentyp ist, und überprüft wird, ob das Temperaturprofil einen zweiten Bereich (II) aufweist, in dem die Temperatur (T) auf einen Maximalwert ansteigt, und bei Vorliegen des zweiten Bereichs (II) anhand dessen Steigung der verwendete Lotspitzentyp abgeleitet wird,

- ein vorgegebener Prozessparameter eine vorgegebene Löttemperatur ($T^S_S$) ist, und überprüft wird, ob das Temperaturprofil (T(t)) einen zweiten Bereich (II) aufweist, in dem die gemessene Temperatur (T) auf einen der tatsächlichen Löttemperatur ($T_S$) entsprechenden Maximalwert ansteigt, und bei Vorliegen des zweiten Bereichs (II) anhand dessen Maximalwert die tatsächliche Löttemperatur ($T_S$) abgeleitet wird,

- ein vorgegebener Prozessparameter eine vorgegebene Lötdauer ($\Delta t^S_L$) ist, und überprüft wird, ob das Temperaturprofil (T(t)) einen an den zweiten auf den Maximalwert ansteigen Bereich (II) anschließenden dritten Bereich (III) aufweist, in dem die Temperatur (T) innerhalb eines begrenzten den Maximalwert ($T_S$) umfassenden Temperaturbereichs liegende Temperaturschwankungen aufweist, und bei Vorliegen des dritten Bereichs (III) anhand dessen Dauer die Lötdauer ($\Delta t_L$) abgleitet wird und/oder anhand einer Amplitude ($\Delta T$) der Temperaturschwankungen im dritten Bereich (III) ein Maß für eine Qualität einer Anpassung einer Heizleistung der Löteinheit (11) an einen von der Geschwindigkeit der Lotzuführung abhängigen Wärmeenergiebedarf abgleitet wird,

- ein vorgegebener Prozessparameter ein vorgegebenes Lot ist, und überprüft wird, ob das Temperaturprofil einen an einen vierten Bereich (IV), in dem die Temperatur (T) absinkt, anschließenden plateauförmigen fünften Bereich (V) aufweist, in dem die Temperatur einen annähernd konstanten einer Schmelztemperatur ($T_S$) des Lots entsprechenden Wert aufweist, und bei Vorliegen dieses fünften Bereichs (V) anhand dieses Werts die Schmelztemperatur ($T_S$) des verwendeten Lots abgeleitet wird, und/oder

- ein vorgegebener Prozessparameter eine während der Lötung zuzuführende Lotmenge ist, und überprüft wird, ob das Temperaturprofil (T(t)) einen an einen vierten Bereich (IV), in dem die Temperatur absinkt, anschließenden fünften Bereich (V) aufweist, in dem die Temperatur (T) einen annähernd konstanten der Schmelztemperatur ($T_S$) des Lots entsprechenden Wert aufweist, und bei Vorliegen des fünften Bereichs (V) anhand der Dauer des fünften Bereichs (V) eine tatsächlich während der Testlötung zugeführte Lotmenge abgeleitet wird.

11. Verfahren nach Anspruch 10, **dadurch gekennzeichnet, dass**
anhand der abgeleiteten Lötdauer ($\Delta t_L$) und der abgeleiteten Lotmenge eine mittlere Geschwindigkeit der Lotzufuhr bestimmt wird.

12. Verfahren nach Anspruch 10 oder 11, **dadurch gekennzeichnet, dass**
ein Prozessfehler erkannt wird,

- wenn im Temperaturprofil (T(t)) mindestens einer der Bereiche (I, II, III, IV, V) fehlt, oder
- wenn mindestens ein abgeleiteter Prozessparameter von dem hierfür vorgegebenen Prozessparameter abweicht.

13. Verfahren nach Anspruch 10, **dadurch gekennzeichnet, dass**

- eine Fehlpositionierung erkannt wird, wenn der unter dem Testprofil (T(t)) eingeschlossene Flächeninhalt von dem vorgegebenen Referenzwert um mehr als eine vorgegebene Differenz abweicht, und
- bei Vorliegen einer Fehlpositionierung keine Informationen über weitere Prozessparameter abgeleitet werden.

14. Verfahren nach Anspruch 10, **dadurch gekennzeichnet, dass**

- die Fertigungseinrichtung für einen nachfolgend auszuführenden Fertigungsprozess gesperrt wird, wenn mindestens ein Prozessfehler erkannt wurde, oder
- anhand vorgegebener Kriterien ein Maß für eine zu erwartende Beeinträchtigung der Qualität von mit der Fertigungseinrichtung auszuführenden Lötungen aufgrund der erkannten Prozessfehler bestimmt wird, und die Fertigungseinrichtung für einen nachfolgend auszuführenden Fertigungsprozess gesperrt wird, wenn das ermittelte Maß einen für eine Einhaltung einer Mindestqualität erforderlichen Schwellwert überschreitet.

**15.** Verfahren zur Ermittlung und/oder Überwachung einer Prozessstabilität und/oder einer Reproduzierbarkeit von mit einer Fertigungseinrichtung gemäß einem der Ansprüche 1 bis 8 ausgeführten Lötungen unter Verwendung eines Verfahrens gemäß Anspruch 9, **dadurch gekennzeichnet, dass**

- zwei oder mehr Testlötungen (i) auf der Temperaturmesseinrichtung (17) ausgeführt werden,
- die zugehörigen Temperaturprofile ($T_i(t)$) aufgezeichnet werden, und
- Abweichungen ($\Delta_{i,j}$) zwischen den Temperaturprofilen ($T_i(t)$) und/oder aus den Temperaturprofilen ($T_i(t)$) abgeleitete Prozessparameter als Funktion der Zeit bestimmt werden, und anhand der als Funktion der Zeit (t) bestimmten Abweichungen ($\Delta_{i,j}$) und/oder Prozessparameter die Prozessstabilität ermittelt und/oder überwacht wird, und/oder
- Abweichungen ($\Delta_{i,j}$) zwischen den Temperaturprofilen ($T_i(t)$) und/oder aus den Temperaturprofilen ($T_i(t)$) abgeleitete Prozessparameter als Funktion einer Anzahl von der Fertigungseinrichtung ausgeführten Lötungen bestimmt werden, und anhand der als Funktion der Anzahl der ausgeführten Lötungen bestimmten Abweichungen ($\Delta_{i,j}$) und/oder Prozessparameter die Reproduzierbarkeit ermittelt und/oder überwacht wird.

**Claims**

**1.** Production device, with

- a work level (1) on which objects, particularly printed circuit boards, with joints to be soldered can be supplied to the production device,
- a support device (3) arranged above the work level (1) and equipped with a transport system, and
- a soldering robot (7) secured on the support device, which can be transported parallel to the work level, beyond said work level, by means of the transport system, wherein the soldering robot (7) features a solder supply (9) and a soldering unit (11), said unit being a soldering iron with an exchangeable soldering tip (13),

**characterized in that**

- a controller (15) is provided which is configured to control the production device using predefined process parameters in order to produce test solder joints with a predefined solder,

wherein one of the predefined process parameters is a predefined standby temperature ($T^S_B$), which is below the predefined soldering temperature ($T^S_L$) and below the melting temperature ($T^S_S$) of the predefined solder,

- a temperature measuring device (17) to be arranged in a predefined position on the work level (1) is provided, wherein on said device test solder joints can be produced with the soldering robot (7), and
- an evaluation unit (35) connected to the temperature measuring device (17) is provided, wherein said evaluation unit is designed to use the temperatures (T) measured by the temperature measuring device (17) during the test soldering processes to derive a temperature profile (T(t)) as a function of time (t) and to evaluate said profile,

wherein the evaluation unit (35) is designed to check whether the temperature profile T(t) of the test solder joint has a first area (I) in which the measured temperature (T) has an approximately constant value corresponding to the actual standby temperature ($T_B$) and, if this is the case, the evaluation unit (35) is designed to determine, on the basis of this value, the standby temperature ($T_B$) which the soldering tip (13) had before the test soldering and, if the temperature profile (T(t)) does not present any such area (I), or if the actual standby temperature ($T_B$) deviates from the predefined standby temperature ($T^S_B$), the evaluation unit (35) is designed to detect a process error.

**2.** Production device as claimed in Claim 1, **characterized in that** the temperature measuring device (17) comprises a temperature sensor (21), which, when installed, is located at a height in relation to the work level (1) that corresponds to the height at which the solder joints of the objects to be soldered in the production operation are located in the production mode.

**3.** Production device as claimed in Claim 1, **characterized in that**

- the temperature measuring device (17) is a device permanently arranged in a partial area of the work level (1), or
- the temperature measuring device (17) is a device to be moved, where required, into the defined position on the work level (1).

**4.** Production device as claimed in Claim 2, **characterized in that** the temperature sensor (21) comprises a thermocouple arranged on a strut (31) on a support (19), wherein said thermocouple is spaced away from the support (19) by the strut (31).

**5.** Production device as claimed in Claim 1, **characterized in that**

- the evaluation unit (35) is connected to the controller (15) in such a way that it causes a production operation, to be commenced by the production device, to be enabled or locked depending on a result of an evaluation of at least one temperature profile (T(t)), Ti(t)).

**6.** Production device as claimed in Claim 5, **characterized in that** an expert access (45) is provided, via which the locking of the production device, caused by the evaluation unit (35), can be unlocked.

**7.** Production device as claimed in Claim 1, **characterized in that** a display (37) connected to the evaluation unit (35) and/or at least one light element (39, 41, 43) connected to the evaluation unit (35), particularly two or three light elements (39, 41, 43) forming a stack light, is provided, via which a result of an evaluation of at least one temperature profile (T(t)), Ti(t)) can be indicated.

**8.** Production device as claimed in Claim 1, **characterized in that** the temperature measuring device (17) comprises a test object (47) on which soldering points (49) are arranged.

**9.** Procedure designed to derive at least one item of information via at least one process parameter of a solder joint produced with the soldering robot (7) of a production device as claimed in one of the previous claims, **characterized in that**

- the soldering robot (7) is positioned over the temperature measuring device (17),
- the soldering robot (7) produces a test solder joint on the temperature measuring device (17) using process parameters predefined by the production device,
- a temperature profile (T(t)) is derived on the basis of the temperatures (T) measured by the temperature measuring device (17), said profile reflecting the measured temperatures (T) as a function of time (t) over a period of time, particularly a period of time that commences before the test soldering process and ends after a cooling down phase that follows the test soldering process, and
- and at least one item of information regarding at least one process parameter is deduced using the temperature profile (T(t)),

**characterized in that**
a predefined process parameter is a predefined standby temperature ($T^S_B$) which the soldering tip (13) of the soldering unit (11) should have before the soldering process, and
a check is performed to determine whether the temperature profile (T(t)) has a first zone (I) in which the temperature (T) has an approximately constant value corresponding to the actual temperature ($T_B$) and, in the event that a first zone (I) exists, the standby temperature (Ts) is derived on the basis of this value.

**10.** Procedure as claimed in Claim 9, **characterized in that**

- a predefined process parameter is a predefined position (X0, Y0) of the soldering robot (7) over the temperature measuring device (17), and a surface area enclosed under the temperature profile (T(t)) is calculated, and by comparing this surface area with a predefined reference value, particularly a reference surface area of a temperature profile, which has a pattern that corresponds to the predefined process parameters, a value for the accuracy of the positioning of the soldering robot (7) over the temperature measuring device (17) is derived,
- a predefined process parameter is a predefined type of soldering tip to be used, and a check is performed to determine whether the temperature profile (T(t)) has a second zone (II) in which the temperature (T) increases to a maximum value and, in the event that a second zone (II) exists, the type of soldering tip being used can be derived from the increase,
- a predefined process parameter is a predefined soldering temperature ($T^S_S$), and a check is performed to determine whether the temperature profile (T(t)) has a second zone (II) in which the measured temperature (T) increases to a maximum value corresponding to the actual soldering temperature (Ts) and, in the event that the second zone (II) exists, the actual soldering temperature (Ts) can be deduced from a maximum temperature value,
- a predefined process parameter is a predefined soldering duration ($\Delta t^S_L$), and a check is performed to determine whether the temperature profile (T(t)) has a third zone (III) that follows from the second zone (II) that rises to the maximum value, wherein in said third zone the temperature (T) presents temperature fluctuations within a limited temperature range comprising the maximum value (Ts), and, in the event that the third zone (III) exists, the soldering duration ($\Delta t_L$) is derived on the basis of the duration of the third zone and/or - on the basis of an amplitude (($\Delta T$) of the temperature fluctuations in the third zone (III) - a value indicating the quality of an adjustment of a heating power of the soldering unit (11) to the demand for heat energy that depends on the solder supply is derived,

- a predefined process parameter is a predefined solder, and a check is performed to determine whether the temperature profile (T(t)) has a plateau-like fifth zone (V) that continues on from the fourth zone (IV) in which the temperature (T) drops, wherein in said fifth zone the temperature has an approximately constant value corresponding to a melting temperature (Ts) of the solder, and, in the event that the fifth zone (V) exists, the melting temperature (Ts) of the solder used is derived on the basis of this value, and/or
- a predefined process parameter is a quantity of solder to be supplied during the soldering process, and a check is performed to determine whether the temperature profile (T(t)) has a fifth zone (V) that continues on from the fourth zone (IV) in which the temperature drops, wherein in said fifth zone the temperature has an approximately constant value corresponding to a melting temperature (Ts) of the solder and, in the event that the fifth zone (V) exists, a quantity of solder actually supplied during the test soldering process is derived on the basis of the duration of the fifth zone (V).

11. Procedure as claimed in Claim 10, **characterized in that**
an average speed for the supply of solder is determined on the basis of the derived soldering duration ($\Delta t_L$) and the derived solder quantity.

12. Procedure as claimed in Claim 10 or 11, **characterized in that** a process error is detected

- if at least one of the zones (I, II, III, IV, V) is missing from the temperature profile (T(t)), or
- if at least a derived process parameter deviates from the process parameter predefined for this purpose.

13. Procedure as claimed in Claim 10, **characterized in that**

- incorrect positioning is detected if the surface area enclosed by the test profile (T(t)) deviates from the predefined reference value by more than a predefined difference, and
- in the event of incorrect positioning, no more information about any additional process parameters is derived.

14. Procedure as claimed in Claim 10, **characterized in that**

- the production device is locked for a production process to be subsequently performed if at least one process error is detected, or
- on the basis of predefined criteria, a value indicating the reduction in quality of solder joints to be produced with the production device that can be expected on the basis of the detected process errors is determined, and the production device is locked for a production process to be subsequently performed if the value determined exceeds a threshold that is required to achieve a minimum quality.

15. Procedure designed to determine and/or monitor a process stability and/or a reproducibility of joints produced with a production device as claimed in one of the Claims 1 to 8 using a procedure as claimed in Claim 9, **characterized in that**

- two or more test solder joints (i) are produced on the temperature measuring device (17),
- the corresponding temperature profiles (T(t)) are recorded, and
- deviations ($\Delta_{i,j}$) between the temperature profiles (Ti(t)) and/or process parameters derived from the temperature profiles Ti(t)) are determined as a function of time, and the stability of the process is determined and/or monitored using the deviations ($\Delta_{i,j}$) and/or process parameters determined as a function of time (t), and/or
- deviations ($\Delta_{i,j}$) between the temperature profiles (Ti(t)) and/or process parameters derived from the temperature profiles Ti(t)) are determined as a function of a number of solder joints produced by the production device, and the reproducibility is determined and/or monitored on the basis of the deviations ($\Delta_{i,j}$) and/or process parameters determined as a function of the number of solder joints produced.

**Revendications**

1. Dispositif de fabrication, avec

- un plan de travail (1), sur lequel des objets présentant des points de soudure à souder, notamment des circuits imprimés, peuvent être acheminés au dispositif de fabrication,
- un dispositif support (3) disposé au-dessus du plan de travail (1) et équipé d'un système de transport, et
- un robot de soudage (7) fixé sur le dispositif support, pouvant être transporté parallèlement au plan de travail, au-dessus de ce dernier, au moyen du système de transport, le robot de soudage (7) comportant une alimentation de soudure (9) et une unité de soudage (11), laquelle unité est un fer à souder équipé d'une panne à souder (13) interchangeable,

**caractérisé en ce qu'**est prévu(e)

- une commande (15), laquelle est conçue de telle sorte à commander le dispositif de fabrication au moyen de paramètres de process prédéfinis, afin d'effectuer des soudages d'essai avec une soudure prédéfinie,

l'un des paramètres de process prédéfinis étant une température de veille ($T^S_B$), qui se situe sous la température de soudure ($T^S_L$) prédéfinie et sous la température de fusion ($T^S_S$) de la soudure prédéfinie,

- un dispositif de mesure de température (17) devant être disposé dans une position prédéfinie sur le plan de travail (1), dispositif sur lequel des soudages d'essai peuvent être exécutés à l'aide du robot de soudage (7), et
- une unité d'exploitation (35) raccordée au dispositif de mesure de température (17), laquelle unité est conçue de telle sorte à déduire, sur la base des températures mesurées lors de soudages d'essai par le dispositif de mesure de température (17), respectivement un profil de température ($T(t)$) en fonction du temps ($t$), et à l'exploiter,

l'unité d'exploitation (35) étant conçue de telle sorte à vérifier que le profil de température $T(t)$ du soudage d'essai présente une première zone (I), dans laquelle la température mesurée ($T$) présente une valeur approximativement constante correspondant à la température de veille effective ($T_B$) et, si c'est le cas, l'unité d'exploitation (35) étant conçue de telle sorte à déterminer, sur la base de cette valeur, la température de veille ($T_S$) que la panne à souder (13) a présenté avant le soudage d'essai et, si le profil de température ($T(t)$) ne présente aucune telle zone (I), ou si la température de veille effective ($T_B$) diffère de la température de veille prédéfinie ($T^S_B$), l'unité d'exploitation (35) étant conçue de telle sorte à détecter une erreur de process.

**2.** Dispositif de fabrication selon la revendication 1, **caractérisé en ce que** le dispositif de mesure de température (17) comprend un capteur de température (21), qui se trouve, à l'état monté, à une hauteur par rapport au plan de travail (1), qui correspond à la hauteur dans laquelle se trouvent, en mode de fabrication, les points de soudure des objets à souder pendant la fabrication.

**3.** Dispositif de fabrication selon la revendication 1, **caractérisé en ce que**

- le dispositif de mesure de température (17) est un dispositif disposé en permanence dans une zone partielle du plan de travail (1), ou
- le dispositif de mesure de température (17) est un dispositif devant être amené, en cas de besoin, dans la position prédéfinie sur le plan de travail (1).

**4.** Dispositif de fabrication selon la revendication 2, **caractérisé en ce que** le capteur de température (21) comprend un thermoélément disposé sur des appuis (31) sur un support (19), lequel thermoélément est espacé du support (19) au moyen des appuis (31).

**5.** Dispositif de fabrication selon la revendication 1, **caractérisé en ce que**

- l'unité d'exploitation (35) est raccordée à la commande (15) de telle sorte qu'elle ordonne, en fonction d'un résultat d'une exploitation d'au moins un profil de température ($T(t)$), $Ti(t)$ un déblocage ou un blocage d'un mode de fabrication à adopter par le dispositif de fabrication.

**6.** Dispositif de fabrication selon la revendication 5, **caractérisé en ce qu'**est prévu un accès expert (45), par l'intermédiaire duquel un blocage du dispositif de fabrication ordonné par l'unité d'exploitation (35) peut être annulé.

**7.** Dispositif de fabrication selon la revendication 1, **caractérisé en ce qu'**est/que sont prévu(s) un dispositif d'affichage (37) raccordé à l'unité d'exploitation (35) et/ou au moins un élément lumineux (39, 41, 43) raccordé à l'unité d'exploitation (35), notamment deux ou trois éléments lumineux (39, 41, 43) constituant un feu tricolore, par l'intermédiaire duquel/desquels un résultat d'une exploitation d'au moins un profil de température ($T(t)$), $Ti(t)$ peut être affiché.

**8.** Dispositif de fabrication selon la revendication 1, **caractérisé en ce que** le dispositif de mesure de température (17) comprend un objet d'essai (47), sur lequel sont disposés des points de soudure (49).

**9.** Procédé destiné à la déduction d'au moins une information par l'intermédiaire d'au moins un paramètre de process avec le robot de soudage (7) d'un dispositif de fabrication conformément à un soudage évoqué dans l'une des revendications précédentes, **caractérisé en ce qu'**/que

- le robot de soudage (7) est positionné au-dessus du dispositif de mesure de température (17),
- le robot de soudage (7) exécute un soudage d'essai sur le dispositif de mesure de température (17) au moyen de paramètres de process prédéfinis par le dispositif de fabrication,
- un profil de température ($T(t)$) est déduit sur la base des températures mesurées ($T$) par le dispositif de mesure de température (17), lequel profil reflète les températures mesurées ($T$) en fonction du temps (t) sur une période de temps, notamment une période de temps qui commence avant le soudage d'essai et se termine après une phase de refroidissement consécutive au soudage d'essai, et

- est déduite, au moyen du profil de température (T(t)), au moins une information sur au moins un paramètre de process,

**caractérisé en ce qu'**un paramètre de process prédéfini est une température de veille ($T^S_B$) prédéfinie, que doit présenter la panne à souder (13) de l'unité de soudage (11) avant l'exécution des soudages, et

en ce qu'est contrôlé si le profil de température (T(t)) présente une première zone (I), dans laquelle la température (T) présente une valeur approximativement constante correspondant à la température de veille effective ($T_B$) et, en présence de la première zone (I), la température de veille (Ts) est déduite à l'aide de cette valeur.

10. Procédé selon la revendication 9, **caractérisé en ce qu'**

- un paramètre de process prédéfini est un positionnement prédéfini (X0, Y0) du robot de soudage (7) au-dessus du dispositif de mesure de température (17), et **en ce qu'**une surface enfermée sous le profil de température (T(t)) est calculée et, au moyen d'une comparaison de cette surface avec une valeur de référence prédéfinie, notamment une surface de référence d'un profil de température, qui présente une allure correspondant aux paramètres de process prédéfinis, **en ce qu'**est déduit un degré pour une précision du positionnement du robot de soudage (7) au-dessus du dispositif de mesure de température (17),

- un paramètre de process prédéfini est un type de panne à souder prédéfini à utiliser, et **en ce qu'**est contrôlé si le profil de température (T(t)) présente une deuxième zone (II), dans laquelle la température (T) augmente à une valeur maximale et, en présence de la deuxième zone (II), le type de panne à souder utilisé est déduit sur la base de cette augmentation,

- un paramètre de process prédéfini est une température de soudure ($T^S_S$) prédéfinie, et **en ce qu'**est contrôlé si le profil de température (T(t)) présente une deuxième zone (II), dans laquelle la température mesurée (T) augmente à une valeur maximale correspondant à la température de soudure effective (Ts) et, en présence de la deuxième zone (II), la température de soudure effective (Ts) est déduite sur la base de cette valeur maximale,

- un paramètre de process prédéfini est une durée de soudage ($\Delta t^S_L$) prédéfinie, et **en ce qu'**est contrôlé si le profil de température (T(t)) présente une troisième zone (III) augmentant jusqu'à la valeur maximale et attenante à la deuxième zone (II), troisième zone dans laquelle la température (T) présente, à l'intérieur d'une plage de température limitée, incluant la valeur maximale (Ts), des fluctuations de température et, en présence de la troisième zone (III), la durée de soudage ($\Delta t_L$) est déduite sur la base de sa durée et/ou **en ce qu'**est déduit, sur la base d'une amplitude (($\Delta T$) des fluctuations de température dans la troisième zone (III), un degré pour une qualité d'une adaptation d'une puissance de chauffage de l'unité de soudage (11) à un besoin en énergie thermique dépendant de la vitesse d'acheminement de la soudure,

- un paramètre de process prédéfini est une soudure prédéfinie, et **en ce qu'**est contrôlé si le profil de température (T(t)) présente une cinquième zone (V) en forme de plateau, attenante à une quatrième zone (IV) dans laquelle la température (T) diminue, cinquième zone dans laquelle la température présente une valeur approximativement constante correspondant à une température de fusion (Ts) de la soudure et, en présence de cette cinquième zone (V), la température de fusion (Ts) de la soudure utilisée est déduite à l'aide de cette valeur, et/ou

- un paramètre de process prédéfini est une quantité de soudure à acheminer pendant le soudage, et **en ce qu'**est contrôlé si le profil de température (T(t)) présente une cinquième zone (V) attenante à une quatrième zone (IV), dans laquelle la température diminue, cinquième zone dans laquelle la température (T) présente une valeur approximativement constante correspondant à la température de fusion (Ts) de la soudure et, en présence de la cinquième zone (V), une quantité de soudure effectivement acheminée pendant le soudage d'essai est déduite sur la base de la durée de la cinquième zone (V).

11. Procédé selon la revendication 10, **caractérisé en ce qu'**une vitesse moyenne d'amenée de la soudure est déterminée au moyen de la durée de soudure ($\Delta t_L$) déduite et de la quantité de soudure déduite.

12. Procédé selon la revendication 10 ou 11, **caractérisé en ce qu'**est détectée une erreur de process

- lorsqu'il manque, dans le profil de température (T(t)), au moins l'une des zones (I, II, III, IV, V), ou
- lorsqu'au moins un paramètre de process déduit diffère du paramètre de process prédéfini à cette fin.

**13.** Procédé selon la revendication 10, **caractérisé en ce qu'**/que

- un mauvais positionnement est détecté lorsqu'une surface enfermée sous le profil de test (T(t)) de la valeur de référence prédéfinie s'écarte de plus d'une différence prédéfinie, et
- en présence d'un mauvais positionnement, aucune information sur d'autres paramètres de process n'est déduite.

**14.** Procédé selon la revendication 10, **caractérisé en ce que**

- le dispositif de fabrication est bloqué pour un process de fabrication à exécuter en aval lorsqu'au moins une erreur de process a été détectée, ou
- lorsque, au moyen de critères prédéfinis, un degré de dégradation attendu de la qualité des soudures à exécuter avec le dispositif de fabrication est déterminé sur la base des erreurs de process détectées, et le dispositif de fabrication est bloqué pour un process de fabrication à exécuter en aval lorsque le degré déterminé dépasse un seuil nécessaire pour le respect d'une qualité minimale.

**15.** Procédé destiné à la détermination et/ou la surveillance d'un stabilité de process et/ou d'une reproductibilité de soudures exécutées avec un dispositif de fabrication selon l'une des revendications 1 à 8 en utilisant un procédé selon la revendication 9, **caractérisé en ce que**

- deux soudures d'essai (i) ou plus sont exécutées sur le dispositif de mesure de température (17),
- les profils de température (T(t)) correspondants sont enregistrés, et
- les écarts ($\Delta_{i,j}$) entre les profils de température ($T_i(t)$) et/ou les paramètres de process dérivés des profils de température $T_i(t)$) sont déterminés en fonction du temps, et la stabilité du process est déterminée et/ou surveillée au moyen des écarts ($\Delta_{i,j}$) et/ou des paramètres de process déterminés en fonction du temps (t), et/ou
- les écarts ($\Delta_{i,j}$) entre les profils de température ($T_i(t)$) et/ou les paramètres de process dérivés des profils de température $T_i(t)$) sont déterminés en fonction d'un nombre de soudures exécutées, et la reproductibilité est déterminée et/ou surveillée au moyen des écarts ($\Delta_{i,j}$) et/ou des paramètres de process déterminés en fonction du nombre des soudures exécutées.

Fig. 1

Fig. 2

EP 2 913 135 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090071945 A1
- JP 3456112 B